(19) Europäisches Patentamt

European Patent Office

Office européen des brevets

(11) Veröffentlichungsnummer: **0 356 815**
**A2**

(12) **EUROPÄISCHE PATENTANMELDUNG**

(21) Anmeldenummer: **89115152.4**

(22) Anmeldetag: **17.08.89**

(51) Int. Cl.5: **C08G 63/88**

(30) Priorität: **30.08.88 DE 3829293**

(43) Veröffentlichungstag der Anmeldung:
**07.03.90 Patentblatt 90/10**

(84) Benannte Vertragsstaaten:
**DE ES FR GB IT NL**

(71) Anmelder: **BAYER AG**

**D-5090 Leverkusen 1 Bayerwerk(DE)**

(72) Erfinder: **Traenckner, Hans-Joachim, Dr.**
**Wedelstrasse 46**
**D-4150 Krefeld 1(DE)**
Erfinder: **Löhr, Karl-Dieter, Dr.**
**Zum Wald 25**
**D-4234 Alpen(DE)**
Erfinder: **Wehnert, Wolfgang, Dr.**
**Bodelschwinghstrasse 14**
**D-4150 Krefeld 1(DE)**
Erfinder: **Wulff, Claus, Dr.**
**Richard-Strauss-Strasse 21**
**D-4150 Krefeld 1(DE)**
Erfinder: **Arlt, Wolfgang, Dr.**
**Schönwasserstrasse 230c**
**D-4150 Krefeld 1(DE)**
Erfinder: **Paul, Hanns-Ingolf, Dr.**
**Hahnenweg 3**
**D-5000 Köln 80(DE)**

(54) Verfahren zur Erniedrigung der Schmelzviskosität von aromatischen Polycarbonaten, aromatischen und/oder araliphatischen Polyestern.

(57) Durch die Behandlung von aromatischen Polycarbonaten, aromatischen Polyestercarbonaten, aromatischen und/oder araliphatischen Polyestern mit überkritischen Gasen oder Gasgemischen in der Schmelze unter Druck wird die Schmelzviskosität der genannten Polymere beträchtlich erniedrigt, so daß chemische Grundoperationen an den Thermoplasten möglich werden, die bei üblichen Bedingungen nur unvollkommen verlaufen.

EP 0 356 815 A2

## Verfahren zur Erniedrigung der Schmelzviskosität von aromatischen Polycarbonaten, aromatischen Polyestercarbonaten, aromatischen und/oder araliphatischen Polyestern

Die Erfindung betrifft ein Verfahren zur Erniedrigung der Schmelzviskosität von aromatischen Polycarbonaten, aromatischen Polyestercarbonaten, aromatischen oder araliphatischen Polyestern sowie deren Mischungen untereinander.

Es ist bekannt, die Schmelzviskosität von Thermoplasten, die bevorzugt bei hohen Temperaturen verarbeitbar sind, durch Zuführung thermischer Energie und/oder durch Veränderung der polymeren Struktur durch mechanische Beanspruchung (Scherung) zu senken.

Diese Temperaturerhöhung bewirkt aber bei Polymeren, wie Polycarbonaten und aromatischen Polyestern, eine irreversible thermische Schädigung in Form von Abbaureaktionen und Verfärbungen.

Zwar gibt es grundsätzlich die Möglichkeit, durch Zusatz von Lösungsmitteln zur Thermoplastschmelze die Viskosität herabzusenken, jedoch ergeben sich große Probleme, das Lösungsmittel nach den einzelnen Grundoperationen wieder vollständig abzutrennen.

Nachteilig bei der genannten Methode zur Erniedrigung der Schmelzviskosität von Thermoplasten ist weiterhin die thermische Verschlechterung der mechanischen und optischen Eigenschaften der Polymere.

Es wurde nun ein Verfahren zur Erniedrigung der Schmelzviskosität von aromatischen Polycarbonaten, aromatischen Polyestercarbonaten, aromatischen oder araliphatischen Polyestern sowie deren Mischungen untereinander gefunden, das dadurch gekennzeichnet ist, daß man die Polycarbonate, Polyestercarbonate, Polyester und deren Mischungen untereinander in der Schmelze mit überkritischen Gasen oder Gasgemischen behandelt.

Das erfindungsgemäße Verfahren wird üblicherweise so durchgeführt, daß man die genannten Polymere zunächst aufschmilzt und die Schmelze mit den überkritischen Gasen oder Gasgemischen in hierfür geeigneten Apparaturen unter Druck behandelt. Die Behandlung der Polymerschmelze mit den überkritischen Gasen oder Gasgemischen kann in der Weise geschehen, daß man das Gas auf die Polymerschmelze unter Druck aufdrückt oder die Schmelze unter Druck z.B. in einer Schneckenmaschine oder in einem statischen Mischer mit dem Gas vermischt.

Die Temperaturen und Drücke beim erfindungsgemäßen Verfahren sind u.a. abhängig vom eingesetzten Polymeren oder den Polymerenmischungen. Die günstigsten Temperaturen und Drücke können leicht durch Vorversuche ermittelt werden.

Im allgemeinen arbeitet man erfindungsgemäß bei Temperaturen von ca. 30°C bis 450°C, bevorzugt 200°C bis 350°C. Die Drücke beim erfindungsgemäßen Verfahren betragen im allgemeinen etwa 25 bis 350 bar, bevorzugt 100 bis 300 bar.

Als Gase, die in ihrem überkritischen Zustand zur Behandlung der genannten Polymere eingesetzt werden können, kommen in Frage: Kohlendioxid, Distickstoffmonoxid, Chlorfluorkohlenwasserstoffe, Alkane, wie Ethan und Propan, Cycloalkane, wie Cyclohexan, Tricyclo[5,2,1,0]decan, Cyclooctan und Cyclododecan, Alkene, wie Ethen und Propen, Wasser und/oder Schwefelhexafluorid, insbesondere Kohlendioxid. Die Definition des überkritischen Zustandes von Gasen ist bekannt und beschrieben in Reid, Sherwood und Prausnitz, "The Properties of gases and Liquids", Mc-Graw Hill, New York 1987.

Die zu behandelnden aromatichen Polycarbonate, Polyestercarbonate und Polyester sind bekannt und beispielsweise beschrieben in der US-Patentschrift 30 38 365, in den DOS 15 70 703, 20 63 050, der Monographie "H. Schnell, Chemistry and Physics of Polycarbonates, Interscience Publishers, New York 1964", sowie in der US-Patentschrift 32 07 814, den Patentschriften EP 10 840, DE 30 16 019, 27 14 544 und in den Patentschriften US 33 51 624 und DE 27 58 030.

Nach dem erfindungsgemäßen Verfahren können auch Mischungen der genannten Polymere untereinander eingesetzt werden. Mischungen der genannten Polymere untereinander sind ebenfalls bekannt und beschrieben in "Schwarz/Ebeling et al., Kunststoffverarbeitung, 2. Auflage, Vogel Verlag 1981" und "Tadmor and Yogos, Principles of Polymer Processing, John Wiley & Sons Inc., New York 1979".

Die jeweils günstigste Menge an einzusetzenden überkritischen Gasen oder Gasgemischen kann leicht durch geeignete Vorversuche ermittelt werden. Die Menge hängt u.a. von der Art des einzusetzenden überkritischen Gases oder Gasgemisches sowie von der Art der zu behandelnden Polymere ab. Beispielsweise werden beim Polycarbonat eingesetzt ein in Gewichten gerechneter ca 5- bis 8-, bevorzugt 7-facher Überschuß von Kohlendioxid zu Polycarbonat.

Eine mögliche Ausführungsform des erfindungsgemäßen Verfahrens besteht darin, daß man das zu behandelnde Polymer in einem Autoklaven aufschmilzt und dann mit einem überkritischen Gas versetzt. Die Viskosität der Lösung wird schlagartig fallen, was an der an der Rührwelle eingetragenen Energie festgestellt werden kann. Die nun dünnflüssige Lösung kann zur Produktschonung abgekühlt werden und steht, bei konstantem Druck, für die vereinfachte Durchführung von Grundoperationen wie plastifizieren, sieben, mischen, lösen, begasen, filtrieren, rühren, extrahieren, strippen, benetzen, erwärmen, abkühlen, verdampfen und chemisch umsetzen zur Verfügung.

Eine weitere mögliche Ausführungsform besteht darin, daß man als Apparat eine Schneckenmaschine benutzt. Dies hat gegenüber bisher verwendeten Apparaten, wie Rührautoklaven oder Extraktionskolonnen, den Vorteil, daß die Aufschmelzung des Polymers vor dem Kontakt mit dem überkritischen Gas, die Kontaktierung mit dem überkritischen Gas und die Abtrennung des überkritischen Gases sowie die Austragung des Polymers durch eine Düsenplatte in einem einzigen Schritt durchgeführt werden können. Besonders vorteilhaft ist es, daß das mit unerwünschten niedermolekularen Begleitstoffen beladene überkritische Gas nicht über die Düsenplatte der Schneckenmaschine sondern über einen Entspannungsdom abgeführt werden kann Dadurch wird eine Nachbehandlung des extrahierten Polymers überflüssig.

Die Schneckenmaschine kann kontinuierlich betrieben werden, wobei es ein besonderer Vorzug dieses Verfahrens ist, daß auch die Anwendung des Gegenstromprinzips zwischen Polymer und überkritischem Gas möglich ist.

Durch die Behandlung der genannten Polymere mit überkritischen Gasen oder Gasgemischen wird die Viskosität der Polymeren beträchtlich gesenkt. So ist es beispielsweise möglich, daß beim Polycarbonat bei einer um ca 150 °C niedrigeren Temperatur als die übliche Schmelztemperatur Viskositäten erzielt werden, die denen entsprechen, die sonst bei einer um 150 °C höheren Temperatur erreicht werden. Durch die beträchtliche Erniedrigung der Schmelzviskosität der behandelten Polymere ist es möglich, z.B. die Polymeren zur Reinigung einer "Schmelzefiltration" über besonders feinmaschige Siebe zu unterwerfen. Außerdem ermöglicht die niedrige Schmelzviskosität die Einarbeitung von Füllstoffen und/oder Verstärkungsfasern unter besonders günstigen Bedingungen in die Polymeren. Darüber hinaus wird beispielsweise durch die Behandlung der Polymeren mit überkritischem Kohlendioxid eine Extraktionswirkung erzielt, die zur Abtrennung von unerwünschten niedermolekularen Begleitstoffen, wie Lösungsmittel, Monomere, Oligomere und Katalysatoren, aus den Polymeren dient.

Als Vorteile des erfindungsgemäßen Verfahrens sind zu erwähnen, daß verschiedene Polymere - auch solche, die bei üblichen Compoundiertemperaturen unter Umesterung miteinander reagieren, sich leicht miteinander mischen lassen.

Als weitere Vorteile des erfindungsgemäßen Verfahrens sind zu erwähnen, daß Polymere mit höherer Durchsatzleistung filtriert werden können, daß Polymere von unerwünschten niedermolekularen Begleitstoffen befreit werden können, daß Polymere und inerte Zuschlagstoffe, wie Glasfasern und inerte Füllstoffe, vereinfacht miteinander gemischt werden können und daß Fasergewebe, -gestricke oder -vliese mit den Polymeren in einfacher Weise getränkt werden können.

Beispiel 1

In einem Autoklaven mit Sichtfenster wurde Bisphenol-A-Polycarbonat ($M_n$: 15.000 - 150.000, Rel. Viskosität: 1,15 - 2,5, gemessen in Dichlormethan) [gemessen nach der in DE-OS 2 063 050 sowie in EP 10 840 und DE-OS 3 016 019 beschriebenen Methode] vorgelegt und bei 320 °C aufgeschmolzen, was zu einer hochviskosen Schmelze führte. Danach wurde Kohlendioxid (ca. 7-facher Überschuß bezogen auf eingesetzte Menge an Polycarbonat) mit einem Druck von 320 bar aufgedrückt. Die Viskosität sank schlagartig. Durch Druck- und Temperaturänderung wurde folgende Wertetabelle erhalten:

| Druck in bar | Temperatur in °C | Viskosität wie |
|---|---|---|
| 250 - 320 | 250 - 310 | Glykol-Glycerin |
| 200 - 280 | 170 - 260 | Glycerin-Honig |
| 100 - 250 | 150 | Honig-hochviskos |
| 50 - 100 | 150 | hochviskos |

Die Tabelle zeigt, daß noch 150 °C unterhalb der typischen Verarbeitungstemperatur für reines Polycarbonat mit Kohlendioxid ein akzeptables Fließverhalten angetroffen wird. Die Viskosität wurde bestimmt durch optischen Vergleich mit Flüssigkeiten bekannter Viskosität.

3

Beispiel 2

In einem 5 1-Autoklaven wurden 1460 g Bisphenol-A-Polycarbonat und 1800 g Kohlendioxid vorgelegt. Die Mischung wurde bei einem Druck von 250 bar auf 257°C aufgeheizt. Nach 15 min konnte der magnetgekuppelte Rührer eingeschaltet werden, ein Zeichen dafür, daß Polycarbonat gelöst wurde. Die Temperatur wurde auf 270°C gehalten. Unter dem Autoklaven war eine Filterkerze in einem druckfesten Gehäuse montiert, mit Filterfläche von 1300 cm² und einer Porenweite von 5 µm aus Edelstahl.

Das Gehäuse, das die Filterkerzen enthält, wurde mittels Kohlendioxid ebenfalls auf 250 bar gebracht. Dann wurde das Bodenventil des Autoklaven geöffnet, so daß das in Kohlendioxid gelöste Polycarbonat in das Kerzengehäuse fließen konnte (s. Zeichnung 1). Über die Kerze wurde ein Druckgefälle von 10 bar eingestellt und die Lösung in 12 min filtriert, was, bezogen auf 1250 g reines Polycarbonat, einen Durchsatz von 6,25 kg/h ergibt.

Dieser Meßpunkt wurde in die Zeichnung 2 eingezeichnet. Reines, das heißt nicht Kohlendioxid enthaltendes Polycaarbonat hätte eine Viskosität von 900 Pa*s gehabt und dementsprechend einen Druck von 90 bar bei gleichem Durchsatz benötigt. Diese Druckdifferenz führt jedoch zur Bildung neuer Quellkörper in der Lösung, die eigentlich durch die Filtration davon befreit werden sollte.

Zur Bewertung dieses Versuches wurden Gegenbeispiele ohne Kohlendioxid erstellt.

Beispiel 3 (Vergleichsbeispiel)

Zur Demonstration der Vorteile des Verfahrens wurde ein Polycarbonat ohne Kohlendioxid filtriert. Um noch eine sinnvolle Vergleichsmöglichkeit zu haben, wurde im Gegensatz zum obigen Beispiel ein Bisphenol-A-Polycarbonat geringeren Molgewichts eingesetzt. Es ist durch eine Viskosität von 35 Pa*s bei 1000 s⁻¹ bei 270°C gekennzeichnet, also ca. 30 mal weniger viskos Das Polycarbonat wurde in einer Schneckenmaschine aufgeschmolzen und bei verschiedenen Temperaturen filtriert.

Verscuhsprogramm: T = 285, 315 und 340°C.

Die Meßpunkte sind in Zeichnung 2 eingetragen. Dazu sind die gemessenen Viskositäten bei 1000 s⁻¹ notiert.

Bewertung

Die anzulegende Druckdifferenz über die Filterkerze steigt ohne Kohlendioxid überproportinal mit der Temperatur an. Bei 285°C sind keine technisch relevanten Durchsätze möglich.

Die durchgesetzte Menge ist eine lineare Funktion der Druckdifferenz.

Eine Viskosität von 130 Pa*s setzt eine obere Grenze für die Durchführbarkeit der Filtration ohne Kohlendioxid. Eine Viskosität von 900 Pa*s, wie im Beispiel 2 ohne Kohlendioxid zu erwarten wäre, verbietet die Filtration.

Unter überkritischen Bedingungen ist sowohl eine vom Durchsatz wie von der Temperatur überlegene Fahrweise gegenüber der Schmelzefiltration möglich.

Beispiel 4

Zur Verdeutlichung der Vorteile, die eine Verarbeitung von Polymeren bei niedrigeren Temperaturen durch das erfindungsgemäße Verfahren bietet, wurde eine Mischung aus Bisphenol-A-Polycarbonat und Polybutylenterephthalat sowie einem Zuschlagstoff bei verschiedenen Temperaturen in einer Schneckenmaschine vermischt. Das Ergebnis ist in der Zeichnung 3 aufgetragen.

Ein Maß für unerwünschte Nebenreaktionen ist der Abfall der Wärmeformbeständigkeit, hier in Form der Vicat-B Temperatur dargestellt. Eine hohe Vicat-Temperatur ist anzustreben.

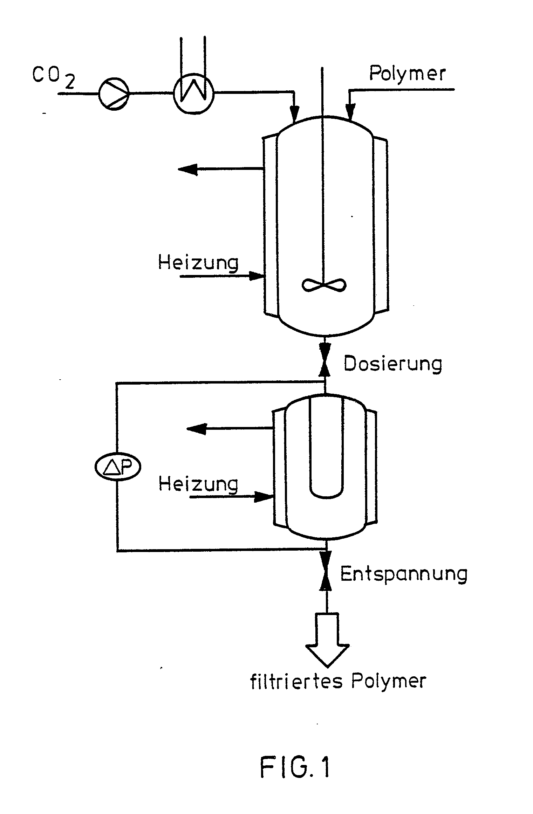

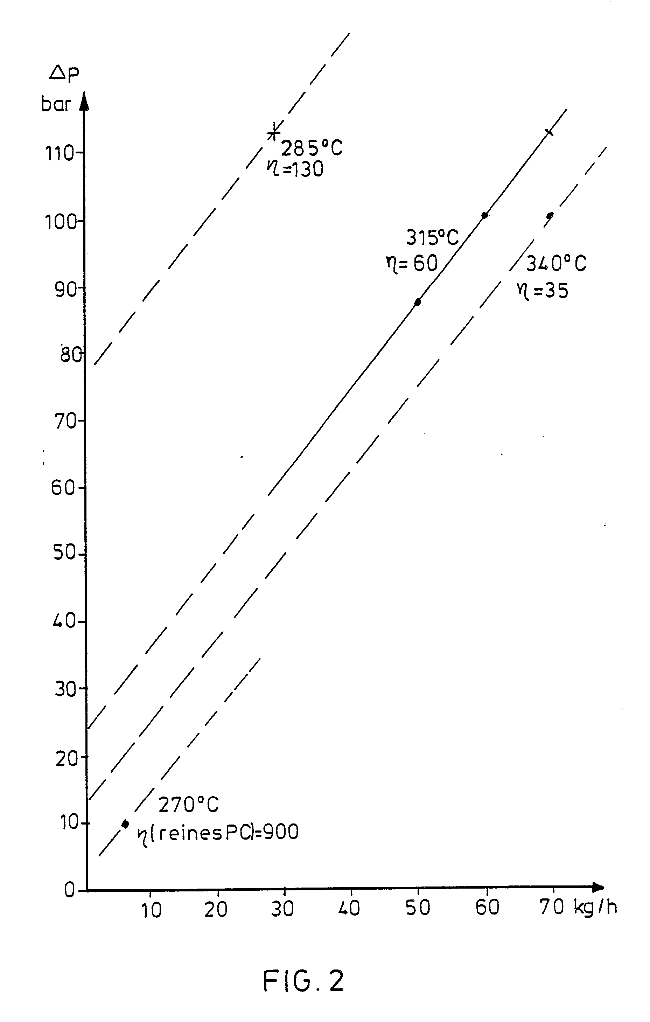

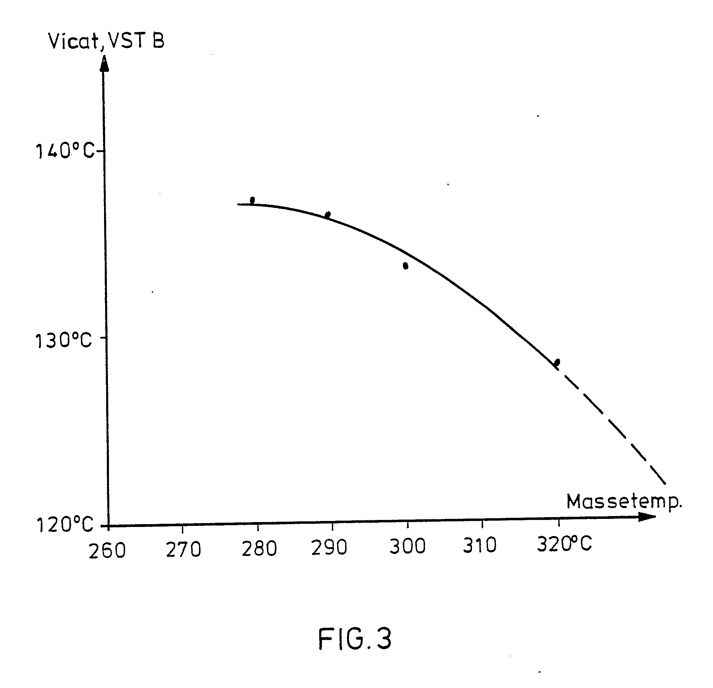

Abbildung 3 zeigt, daß ein überproportionaler Abfall der Vicat-Temperatur und damit ein überproportionaler Anstieg der Nebenreaktion mit der Temperatur zu beobachten ist.

Der Vorteil zum bisherigen Verfahren wird deutlich, wenn die (extrapolierten) Vicat-Temperaturen verglichen werden:

|  | Massetemp. | Vicat-B |
|---|---|---|
| jetziges Verfahren | 340 | 120 (extrapol.) |
| neues Verfahren | 270 | 137 |

Das jetzige Verfahren läßt bei der vorteilhaften Massetemperatur von 270° C keine technisch sinnvollen Durchsätze zu.

**Ansprüche**

1. Verfahren zur Erniedrigung der Schmelzviskosität von aromatischen Polycarbonaten, aromatischen Polyestercarbonaten, aromatischen oder araliphatischen Polyestern sowie deren Mischungen untereinander, dadurch gekennzeichnet, daß man die Polycarbonate, Polyestercarbonate oder Polyester oder deren Mischungen untereinander in einer Schmelze mit überkritischen Gasen oder Gasgemischen unter Druck behandelt.

2. Verfahren nach Anspruch 1, dadurch gekennzeichnet, daß man die Polycarbonate, Polyestercarbonate und/oder Polyester bei Temperaturen von 30 bis 450° C mit überkritischen Gasen oder Gasgemischen behandelt.

3. Verfahren nach Ansprüchen 1 und 2, dadurch gekennzeichnet, daß man die Polycarbonate, Polyestercarbonate und/oder Polyester mit überkritischen Gasen oder Gasgemischen bei einem Druck von 25 bis 350 bar behandelt.

4. Verfahren nach Ansprüchen 1 bis 3, dadurch gekennzeichnet, daß man als überkritische Gase Kohlendioxid, Distickstoffmonoxid, Chlorfluorkohlenwasserstoffe, Alkane, Cycloalkane, Alkene und/oder Schwefelhexafluorid einsetzt.

LeA 26 234

$CO_2$

Polymer

Heizung

Dosierung

ΔP

Heizung

Entspannung

filtriertes Polymer

FIG.1

FIG. 2

FIG.3